**Europäisches Patentamt**

**European Patent Office**

**Office européen des brevets**

(11) Veröffentlichungsnummer: **0 332 982 B1**

# (12) EUROPÄISCHE PATENTSCHRIFT

(45) Veröffentlichungstag der Patentschrift:
**11.09.91 Patentblatt 91/37**

(51) Int. Cl.$^5$: **B29B 7/60**

(21) Anmeldenummer: **89103947.1**

(22) Anmeldetag: **07.03.89**

(54) Verfahren und Vorrichtung zum Mischen von Mehrkomponenten-Kunststoffen, insbesondere Polyurethan.

(30) Priorität: **12.03.88 DE 3808351**

(43) Veröffentlichungstag der Anmeldung:
**20.09.89 Patentblatt 89/38**

(45) Bekanntmachung des Hinweises auf die
Patenterteilung:
**11.09.91 Patentblatt 91/37**

(84) Benannte Vertragsstaaten:
**DE FR GB IT SE**

(56) Entgegenhaltungen:
**DE-A- 3 201 221**
**US-A- 4 223 811**

(73) Patentinhaber: **ELASTOGRAN
POLYURETHANE GMBH
Landwehrweg
W-2844 Lemförde (DE)**

(72) Erfinder: **Taubenmann, Peter
Strindbergstrasse 1
W-8000 Muenchen (DE)**
Erfinder: **Reisinger, Gerhard
Zugspitzstrasse 5
W-8025 Unterhaching (DE)**

(74) Vertreter: **Springer, Hans Jörg, Dr. et al
BASF Aktiengesellschaft Patentabteilung
Carl-Bosch-Strasse 38
W-6700 Ludwigshafen (DE)**

**Beschreibung**

Die Erfindung betrifft ein Verfahren nach dem Oberbegriff des Patentanspruchs 1 sowie eine Vorrichtung nach dem Oberbegriff des Patentanspruchs 3.

Bei der Herstellung von Mehrkomponenten-Kunststoffteilen, insbesondere aus Polyurethan, in der Schuhindustrie, werden Teile mit unterschiedlichen Farben gefertigt. Diese Farben werden durch Einfärben der einen Kunststoffkomponente, vorzugsweise des Polyols, erzeugt. Ein Farbwechsel ist bei dieser Arbeitsweise schwierig und aufwendig. Es ist auch schon vorgeschlagen worden, die Farben als Einzelkomponente direkt in die Mischkammer einzuführen. Da der Farbanteil im Verhältnis zu dem Anteil der Kunststoffkomponenten normalerweise sehr gering ist, ist es erforderlich, sehr geringe Massenströme zu erzeugen, zu konditionieren und zu fördern. Dieses stellt nicht nur grundsätzlich hohe Anforderungen an die Genauigkeit, sondern es treten auch Probleme bei der Förderung durch die verhältnismäßig langen Schläuche zwischen Pumpe und Mischkammer auf. Insbesondere treten, bedingt durch die geringen Massenströme, folgende Probleme auf :

1. Die lange Verweildauer in den Leitungen macht eine Konditionierung sehr schwierig.
2. Die Sedimentationsgefahr der Farbpigmente erhöht sich.
3. Volumenänderungen von Schläuchen infolge von Druckänderungen führen zu einer erheblichen Veränderung des Massenstromes.

Bei den bekannten Vorrichtungen wird der Massenstrom durch Zahnradpumpen erzeugt, wobei unterschiedliche Massenströme für verschiedene Anwendungen durch eine Veränderung der Drehzahl erreicht wird. Die stufenlose Verstellung der Drehzahl geschieht durch mechanisch verstellbare Getriebe oder mit Hilfe von Gleichstrommotoren, bei denen die Drehzahl elektrisch veränderbar ist.

Der Erfindung liegt nun die Aufgabe zugrunde, ein Verfahren und eine Vorrichtung der eingangs genannten Art zu schaffen, bei dem auch bei geringen Massenströmen von Zusatzkomponenten, insbesondere Farbstoffen, eine exakte Konditionierung möglich ist und gleichzeitig die Sedimentationsgefahr der Farbpigmente vermieden wird, und eine Veränderung, bedingt durch Volumenänderungen von Schläuchen, nicht auftritt.

Diese Aufgabe wird bei einem Verfahren nach dem Kennzeichen des Anspruches 1 und bei einer Vorrichtung nach dem Kennzeichen des Anspruches 3, gelöst.

Bei dem erfindungsgemäßen Verfahren wird eine nicht verstellbare Pumpe eingesetzt, die einfach aufgebaut ist und daher sehr zuverlässig und mit hoher Lebensdauer arbeitet. Es wird ein Massenstrom erzeugt, der für alle Betriebsbedingungen konstant und immer gleich oder größer als der maximal für den entsprechenden Anwendungsfall erforderliche Massenstrom ist. Eine Veränderung der Drehzahl der Pumpe erfolgt also nicht. Dieser Massenstrom wird fortlaufend und kontinuierlich direkt an die Mischkammer herangeführt. Unmittelbar an der Mischkammer befindet sich ein Stromteiler für jede Zusatzkomponente, der im "Schußbetrieb" die erforderliche Menge der Zusatzkomponente, insbesondere die Farbstoffe vom Gesamtmassenstrom dieser Komponente abzweigt und unmittelbar in die Mischkammer einführt. Der Stromteiler ist stufenlos ein- bzw. verstellbar, so daß der Massenstrom einfach den jeweiligen Produktionsbedingungen angepaßt werden kann. Die Einstellung kann mechanisch oder elektromagnetisch erfolgen. Erfindungsgemäß wird der konstante Massenstrom durch die einfach aufgebaute, nicht verstellbare Pumpe fortlaufend bis an die Mischkammer heran und zurück zum Vorratstank der entsprechenden Zusatzkomponente geführt. Der Stromteiler, der in unmittelbarer Nähe der Mischkammer angeordnet ist, lenkt, je nach Bedarf, einen kleineren oder größeren Anteil der Zusatzkomponente, insbesondere des Farbstoffes, in die Mischkammer um. Es erfolgt also auch dann eine Teilströmung in den Rücklauf, wenn die Mischvorrichtung mit der entsprechenden Zusatzkomponente versorgt wird. Es wird lediglich ein größerer oder kleinerer Anteil der Zusatzkomponente abgezweigt. In der Nichtbetriebsstellung wird die gesamte Zusatzkomponente im Umlauf gefördert, so daß die eingangs angesprochenen Probleme, beispielsweise die Sedimentationsgefahr, hinsichtlich der Farbpigmente nicht auftreten. Da die Stromteilung direkt an der Mischkammer erfolgt, bleibt der Einfluß der in ihrem Volumen veränderbaren Schläuche unerheblich. Jede Zusatzkomponente kann sehr genau und auch in geringen Mengen im Verhältnis zu den Kunststoffkomponenten konditioniert werden, wobei diese Konditionierung genau wiederholbar ist.

In den Ansprüchen 2 und 3 bis 8 sind vorteilhafte Weiterbildungen der Erfindung unter Schutz gestellt.

Im folgenden wird die Erfindung unter Hinweis auf die Zeichnung anhand einiger Ausführungsbeispiele näher erläutert.

Es zeigt :

Fig. 1 eine schematische Darstellung einer Niederdruckmischvorrichtung mit den wesentlichen angeschlossenen Aggregaten ;

Fig. 2 einen Längsschnitt durch eine Ausführungsform eines Stromteilers im geschlossenen Zustand mit schematisch angedeuteten Leitungen ;

Fig. 3    eine Einzelheit des in Fig. 2 dargestellten Stromteilers, jedoch in geöffnetem Zustand ;

Fig. 4    einen der Fig. 2 entsprechenden Schnitt, jedoch durch eine andere Ausführungsform ;

Fig. 5    einen der Fig. 2 entsprechenden Schnitt durch eine weitere Ausführungsform eines Stromteilers in geschlossenem Zustand ;

Fig. 6    eine Einzelheit des Stromleiters der Fig. 5, jedoch in geöffnetem Zustand ;
          und

Fig. 7    eine Seitenansicht auf die Darstellung der Fig. 6.

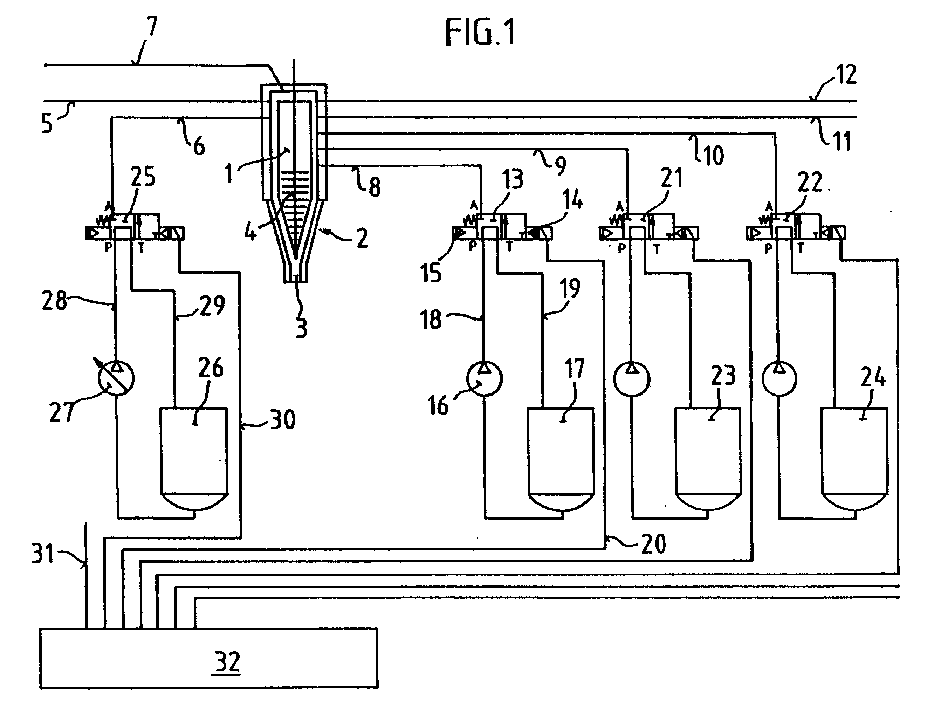

Die in Fig. 1 dargestellte Niederdruckmischvorrichtung besteht aus einem Gehäuse 2, das eine Mischkammer 1 enthält, in der ein mechanisch angetriebener Rührer 4 angeordnet ist. Die Austrittsöffnung aus der Mischkammer 1 ist mit 3 bezeichnet. In die Mischkammer führen Vorlaufleitungen 5 und 6 zum Einbringen der Kunststoffkomponenten. Eine Leitung für ein Spülmittel ist mit 7 bezeichnet.

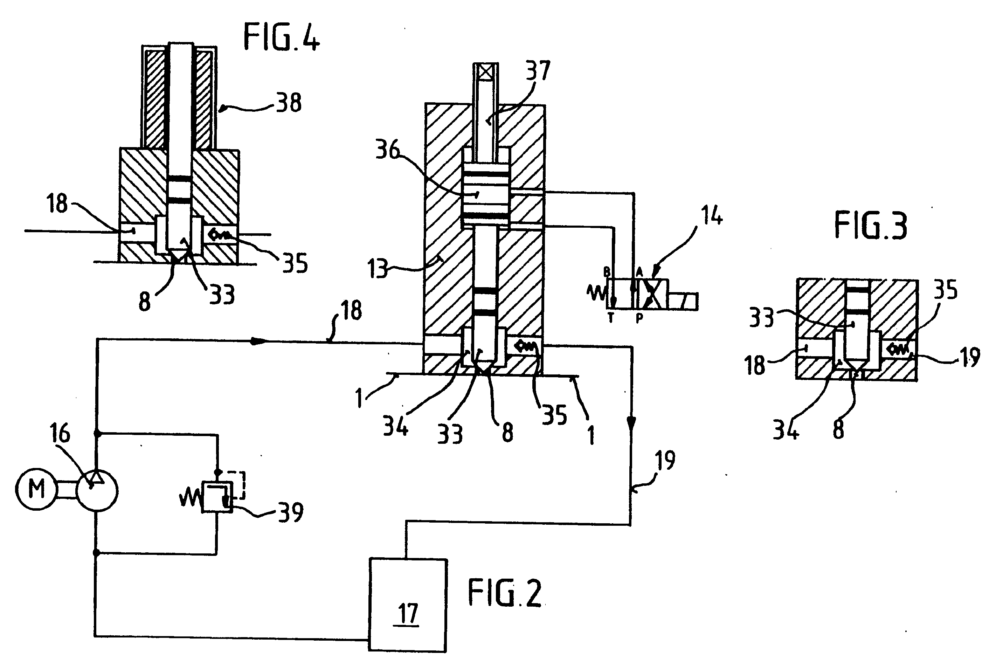

Weiterhin führen in die Mischkammer 1 Leitungen 8, 9, 10, 11 und 12 zum Einbringen von Zusatzkomponenten, bei denen es sich bei den hier beschriebenen Ausführungsformen um unterschiedliche Farbstoffe handelt. Die Leitungen 8, 9, 10, 11 und 12 sind aus zeichentechnischen Gründen relativ lang dargestellt. Tatsächlich sitzen die Stromteiler 13, 21 und 22 sowie die entsprechenden Stromteiler in den Leitungen 11 und 12 unmittelbar an dem Gehäuse 2 der Mischkammer 1, so daß die Leitungen 8 bis 12 sehr kurz und praktisch nur "Öffnungen" sind. Dieses wird auch unter Berücksichtigung der Figuren 2 bis 6 deutlich, da die "Leitung" 8 hier lediglich als unmittelbar in die angedeutete Mischkammer führende Öffnung oder Düse dargestellt ist. Der Kunststoffkomponentenförderung zu der Vorlaufleitung 6 dienen bekannte Aggregate, wie eine Förderpumpe 27, ein Schaltventil 25 und ein Lagertank 26. Das Schaltventil wird von einer mit 32 bezeichneten Steuer- und Regeleinrichtung aus bedient. Dieses ist durch die Leitung 30 angedeutet.

Zur Förderung und Dosierung der zweiten Kunststoffkomponente zu der Vorlaufleitung 5, sind entsprechende Aggregate vorgesehen, die hier nicht gezeichnet sind. Lediglich eine Leitung 31, die zu der Steuer- und Regeleinrichtung 32 führt, ist angedeutet. Grundsätzlich sind die Mischvorrichtungen und die Aggregate zur Förderung und Eindosierung der Kunststoffkomponenten und des Spülmittels durch die Leitung 7 bekannt.

Die bereits erwähnten Stromteiler 13, 21 und 22 für die "Leitungen" 8, 9 und 10 sowie die nicht gezeigten entsprechenden Stromteiler für die "Leitungen" 11 und 12 sind unmittelbar an dem Gehäuse 2 der Mischkammer 1 angeordnet und zwar vorzugsweise in einer Ebene senkrecht zu der Achse des Rührers 4. Die Darstellung ist hier aus zeichentechnischen Gründen in Fig. 1 anders.

Für jede Zusatzkomponente, d.h. bei der hier beschriebenen Ausführungsform für jeden Farbstoff, ist ein Stromteiler 13 mit einem Wegeventil 14 vorgesehen, das durch eine Leitung 20 mit der Steuer- und Regeleinrichtung 32 verbunden ist. Zu jedem mittelbar an dem Gehäuse 2 angeordneten Stromteiler führt eine Vorlaufleitung 18 für den entsprechenden Farbstoff, ausgehend von einem Vorratstank 17 über eine einfach aufgebaute, nicht verstellbare Pumpe 16. Zurück zu dem Vorratstank 17 führt eine Rücklaufleitung 19 für diese Zusatzkomponente.

Der Aufbau für die Stromteiler 21 und 22 und die nichtgezeigten Stromteiler ist entsprechend. Für die Stromteiler 21 und 22 sind ebenfalls Pumpe und Vorratstank 23 und 24 gezeichnet. Bei der in Fig. 1 dargestellten Ausführungsform können insgesamt fünf Farbkomponenten in die Mischkammer durch unmittelbar an dieser angeordnete Stromteiler eingebracht werden.

In den Fig. 2 und 3 ist eine Ausführungsform eines Stromteilers 13 im Schnitt mit seinen Zuleitungen dargestellt. Dieser Stromteiler besteht aus einem Nadelventil mit einer Ventilnadel 33, die die Öffnung oder "Leitung" 8 in die Mischkammer 1 in der in Fig. 2 dargestellten Stellung verschließt und in der in Fig. 3 gezeigten Stellung mehr oder weniger weit freigibt. Die Ventilnadel 33 wird durch eine Kolben- und Zylindereinheit 36 gesteuert und durch das Wegeventil 14 bestätigt. Ein verstellbarer Anschlag ist mit 37 bezeichnet.

Angrenzend an die Öffnung oder "Leitung" 8, die praktisch den Ventilsitz für die Ventilnadel 33 bildet, ist ein Ringraum 34 ausgebildet. In diesen Ringraum 34 führt die Vorlaufleitung 18 von der Pumpe 16, die mit einer Überlastsicherung 39 ausgerüstet ist. Aus dem Ringraum 34 führt auf der gegenüberliegenden Seite die Rücklaufleitung 19 zum Vorratstank 17. Hier ist ein Rückschlagventil 35 vorgesehen, das den Druck dieses Massenstromes konstant hält.

Unter Berücksichtigung der Fig. 2 und 3 ist leicht erkennbar, daß die in dem Vorratstank 17 gelagerte Farbkomponente fortlaufend im Kreislauf durch die nicht verstellbare Pumpe 16 gefördert wird, wenn die in Fig. 2 gezeigte Stellung eingenommen wird. Wenn das Nadelventil von dem durch die Öffnung 8 gebildeten Ventilsitz abgehoben wird, so strömt ein Teil des Massenstromes dieser Farbkomponente in die Mischkammer 1. Der andere Teilstrom gelangt nach wie vor in die Rücklaufleitung 19 und damit zurück zum Lagertank 17. Je nachdem, wie weit die Ventilnadel 33 den Ventilsitz freigibt, erfolgt eine mehr oder wenige starke Umleitung des Massenstromes in die Mischkammer 1.

In Fig. 4 ist eine andere Ausführungsform dargestellt, bei der anstelle der Kolben- und Zylindereinheit 36 eine elektromagnetische Steuerung für das Nadelventil durch einen Proportionalmagneten 38 vorgesehen ist.

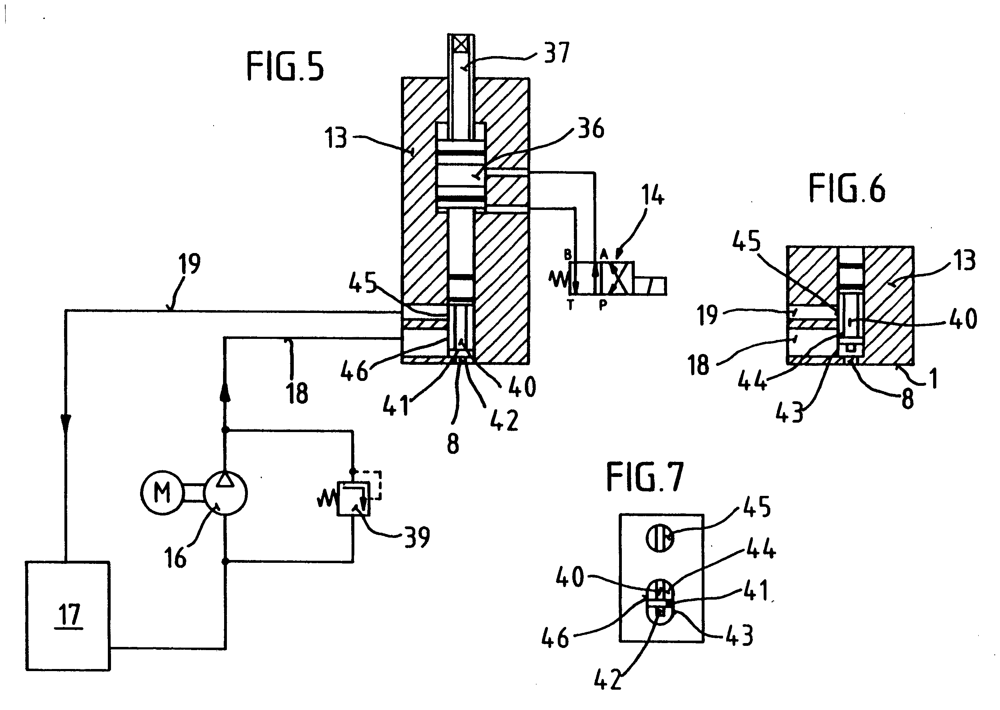

In den Fig. 5 bis 7 ist eine andere Ausführungsform dargestellt, bei der der Stromteiler 13 durch ein Ventil mit einem Ventilteller 41 und einem Ventilschaft 40 verminderten Durchmessers gebildet wird. Auf der dem Ventilschaft gegenüberliegenden Seite des Ventiltellers 41 befindet sich ein kurzer Ansatz 42, der zusammen mit dem Ventilteller 41 die den Ventilsitz bildende Öffnung oder "Leitung" 8 verschließt oder freigibt. Die Offenstellung ist in Fig. 6 gezeigt. Da der Ventilschaft 40 einen geringeren Durchmesser aufweist, entsteht ein Ringraum 44 um diesen Ventilschaft herum. In den Bereich dieses Ringraumes münden die Vorlaufleitung 18 von der Pumpe 16 und die Rücklaufleitung 19 von dem Lagertank 17.

Die Öffnung 46, zu der die Vorlaufleitung 18 führt, ist langgestreckt und bei der hier dargestellten Ausführungsform oval gestaltet. Darüber liegt die kreisförmige Öffnung 45, die mit der Rücklaufleitung 19 verbunden ist. Beim Betrachten der Fig. 6 und 7 wird deutlich, daß der Ventilteller 41 die Öffnung 46 unterteilt, so daß ein Teilstrom zu der Öffnung 8 und damit in die Mischkammer 1 gelangt, und daß der andere Teilstrom in den Ringraum 44 und damit in die Rücklaufleitung 19 und zurück zum Vorratstank 17 strömt. Je nachdem, wie weit der Ventilteller 41 von der Öffnung 8 entfernt ist, erfolgt die Unterteilung der Öffnung 46 und damit die Aufteilung des Massenstromes durch die Vorlaufleitung 18. Hierdurch ist eine Stromteilung möglich, die von der Viskosität der strömenden Zusatzkomponente unabhängig ist.

Wenn, ausgehend von den entsprechenden Steuersignalen von der Steuer- und Regeleinrichtung 32, ein Mischvorgang durchgeführt und Kunststoffkomponenten durch die Vorlaufleitungen 5 und 6 in die Mischkammer 1 eingeführt werden, wird nach einem im voraus festgelegten Programm die entsprechende Farbkomponente — oder auch mehrere Farbkomponenten — beispielsweise durch den Stromteiler 13, ebenfalls in die Mischkammer eingeführt. In Abhängigkeit von dem im voraus festgelegten Programm können mehrere Stromteiler mehr oder weniger weit geöffnet werden, um so mehr oder weniger große Anteile der umlaufenden Massenströme in die Mischkammer einzuleiten. Hierdurch ist es auch möglich, in der Mischkammer selbst Farbmischungen vorzunehmen und so sehr genau und wiederholbar Teile mit bestimmten Farben herzustellen.

## Patentansprüche

1. Verfahren zum Mischen von Mehrkomponenten-Kunststoffen, insbesondere Polyurethan, bei dem während des Mischens der Kunststoffkomponenten in einer Mischkammer eine oder mehrere weitere Zusatzkomponenten, insbesondere Farbstoffe mit Hilfe einer Pumpe von einem Vorratstank zugeführt werden, dadurch gekennzeichnet, daß am Eintritt der Zusatzkomponente(n) in die Mischkammer eine Teilung des Komponentenstromes mit einem Teilstrom direkt in die Mischkammer und mit einem anderen Teilstrom in einen Rücklauf zurück zu dem Vorratstank für diese Zusatzkomponente erfolgt, wobei diese beiden Teilströme stufenlos von Null bis auf den von der Pumpe vorgegebenen Maximalwert verstellbar sind, und daß die Pumpe einen konstanten Massenstrom fördert, der gleich oder größer ist als der maximal erforderliche Massenstrom.

2. Verfahren nach Anspruch 1, dadurch gekennzeichnet, daß der Massenstrom jeder Zusatzkomponente auf ein konstantes Druckniveau gebracht wird.

3. Vorrichtung zur Durchführung des Verfahrens nach Anspruch 1, mit einer Mischkammer, zu der Leitungen für die Kunststoffkomponenten und Leitungen für mindestens eine Zusatzkomponente führen, wobei jede Zusatzkomponente aus einem Vorratstank durch eine Pumpe zu der Mischkammer gefördert wird, dadurch gekennzeichnet, daß die Pumpe (16) jeder Zusatzkomponente einen konstanten Massenstrom fördert, der gleich oder größer ist als der maximal erforderliche Massenstrom, und daß am Eintritt der Zusatzkomponente in die Mischkammer (1) ein Stromteiler (13) angeordnet ist, dessen einer Teilstrom direkt in die Mischkammer und dessen anderer Teilstrom zurück zu dem Vorratstank (17) führt, wobei diese beiden Teilströme stufenlos von Null bis auf den von der Pumpe vorgegebenen Maximalwert verstellbar sind.

4. Vorrichtung nach Anspruch 3, dadurch gekennzeichnet, daß der Massenstrom der Pumpe (16) jeder Zusatzkomponente durch ein Rückschlagventil (35) auf ein konstantes Druckniveau gebracht wird.

5. Vorrichtung nach Anspruch 3 oder 4, dadurch gekennzeichnet, daß der Stromteiler (13) ein Nadelventil ist, dessen Ventilfläche den Teilstrom in die Mischkammer (1) steuert, wobei angrenzend an den Ventilsitz ein Ringraum (34) vorgesehen ist, der mit der Pumpe (16) und mit dem Vorratstank (17) verbunden ist.

6. Vorrichtung nach Anspruch 3 oder 4, dadurch gekennzeichnet, daß der Stromteiler ein Tellerventil ist, dessen Ventilteller (41) entweder den in die Mischkammer (1) führenden Ventilsitz verschließt, oder in Zusammenarbeit mit einer seitlich angeordneten und mit der Pumpe (16) verbundenen Steueröffnung (46) die Stromteilung bewirkt, wobei der Teilstrom zurück zu dem Vorratstank (17) über einen Ringraum (44) oberhalb des Ventiltellers (41) und eine mit der Rücklaufleitung (19) zum Vorratstank verbundene Rücklauföffnung (45) oberhalb der Steueröffnung (46) in dem Ventilgehäuse führt.

7. Vorrichtung nach einem der vorstehenden Ansprüche 3 bis 5, dadurch gekennzeichnet, daß die Betätigung des Stromteilers (13) durch eine hydraulische Kolben- und Zylindereinheit (36) mit einem verstellbaren Anschlag (37) erfolgt.

8. Vorrichtung nach einem der Ansprüche 3 bis 6, dadurch gekennzeichnet, daß die Betätigung des Stromteilers (13) elektromagnetisch durch einen Proportionalmagneten (38) erfolgt.

## Claims

1. A process for mixing multicomponent plastics, in particular polyurethane, in which during the mixing of the plastics components in a mixing chamber one or more additional components, in particular dyes, are fed in from a reservoir tank with the aid of a pump, which comprises dividing the component stream at the point of entry of the additional component(s) into the mixing chamber into a stream which leads directly into the mixing chamber and another stream which leads back into the reservoir tank for this additional component, the flow rates of these two separate streams being continuously adjustable from zero to the maximum value dictated by the pump, said pump conveying a constant mass flow which is equal to or greater than the maximum mass flow required.

2. A process as claimed in claim 1, wherein the mass flow of each additional component is brought to a constant pressure level.

3. Apparatus for carrying out the process of claim 1, comprising a mixing chamber with lines for the plastics components and lines for at least one additional component, each additional component being conveyed to the mixing chamber from a reservoir tank by a pump, wherein the pump (16) of each additional component conveys at a constant mass flow which is equal to or greater than the maximum mass flow required, and wherein at the point of entry of the additional component into the mixing chamber (1) there is disposed a stream divider (13) which sends one stream directly into the mixing chamber and the other stream back to the reservoir tank (17), the flow rates of these two separate streams being continuously adjustable from zero to the maximum value dictated by the pump.

4. Apparatus as claimed in claim 3, wherein the mass flow of the pump (16) of each additional component is brought to a constant pressure level by a nonreturn valve (35).

5. Apparatus as claimed in claim 3 or 4, wherein the stream divider (13) is a needle valve whose valve surface controls the stream into the mixing chamber (1) and whose valve seat opens out into an annular space (34) which communicates with the pump (16) and with the reservoir tank (17).

6. Apparatus as claimed in claim 3 or 4, wherein the stream divider is a plate valve whose valve plate (41) either closes the valve seat leading into the mixing chamber (1) or cooperates with a control opening (46) which is disposed at the side and communicates with the pump (16) and effects stream division, the stream which goes back to the reservoir tank (17) passing via an annular space (44) above the valve plate (41) and a return opening (45) which is situated above the control opening (46) in the valve housing and communicates with the return line (19) leading to the reservoir tank.

7. Apparatus as claimed in any one of the preceding claims 3 to 5, wherein the stream divider (13) is actuated by a hydraulic piston and cylinder unit (36) having an adjustable abutment (37).

8. Apparatus as claimed in any one of claims 3 to 6, wherein the stream divider (13) is actuated electromagnetically by a proportional magnet (38).

## Revendications

1. Procédé de mélange de matières plastiques à plusieurs constituants, en particulier de polyuréthanne, dans lequel, pendant le mélange des constituants de la matière plastique dans une chambre de mélange, un ou plusieurs constituants supplémentaires, en particulier des colorants, sont amenés d'un réservoir au moyen d'une pompe, caractérisé par le fait qu'à l'entrée du ou des constituants supplémentaires dans la chambre de mélange est opérée une division du débit de constituant(s), avec un débit partiel allant directement dans la chambre de mélange et un autre débit partiel allant dans un retour pour retourner au réservoir de ce constituant supplémentaire, ces deux débits partiels étant réglables de manière progressive de zéro à la valeur maximale fixée par la pompe, et que la pompe a un débit-masse constant et égal ou supérieur au débit-masse maximal nécessaire.

2. Procédé selon la revendication 1, caractérisé par le fait que le débit-masse de chaque constituant supplémentaire est mis à un niveau de pression constant.

3. Dispositif pour la mise en oeuvre du procédé selon la revendication 1, comportant une chambre de

5

mélange à laquelle vont des conduites pour les constituants de la matière plastique et des conduites pour au moins un constituant supplémentaire, chaque constituant supplémentaire étant amené d'un réservoir à la chambre de mélange au moyen d'une pompe, caractérisé par le fait que la pompe (16) de chaque constituant supplémentaire a un débit-masse constant et égal ou supérieur au débit-masse maximal nécessaire, et qu'à l'entrée du constituant supplémentaire dans la chambre de mélange (1) est placé un diviseur de débit (13) dont un débit partiel va directement dans la chambre de mélange et l'autre débit partiel retourne au réservoir (17), ces deux débits partiels étant réglables de manière progressive de zéro à la valeur maximale fixée par la pompe.

4. Dispositif selon la revendication 3, caractérisé par le fait que le débit-masse de la pompe (16) de chaque constituant supplémentaire est mis à un niveau de pression constant par un clapet de non-retour (35).

5. Dispositif selon l'une des revendications 3 et 4, caractérisé par le fait que le diviseur de débit (13) est une soupape à pointeau dont la surface commande le débit partiel allant dans la chambre de mélange (1), un espace annulaire (34), qui est relié à la pompe (16) et au réservoir (17), étant prévu près du siège de cette soupape.

6. Dispositif selon l'une des revendications 3 et 4, caractérisé par le fait que le diviseur de débit est une soupape à plateau dont le plateau (41) ou bien obture le siège de soupape conduisant à la chambre de mélange (1), ou bien produit la division du débit en coopération avec un orifice de commande (46) situé latéralement et relié à la pompe (16), le débit partiel retournant au réservoir par un espace annulaire (44) situé au-dessus du plateau (41) de la soupape, et un orifice de retour (45) relié à la conduite de retour (19) allant au réservoir et situé au-dessus de l'orifice de commande (46) conduisant dans le corps de la soupape.

7. Dispositif selon l'une des revendications 3 à 5, caractérisé par le fait que le diviseur de débit (13) est actionné par un vérin hydraulique (36) pourvu d'une butée réglable (37).

8. Dispositif selon l'une des revendications 3 à 6, caractérisé par le fait que le diviseur de débit (13) est actionné par voie électromagnétique par un aimant proportionnel (38).

# FIG.1

FIG.4

38

18

35

8    33

36

37

13

B   A   14

T   P

18

19

FIG.3

33   35

18   19

34   8

16

39

M

17

FIG.2

8

EP 0 332 982 B1

FIG.5

FIG.6

FIG.7